# EUROPEAN PATENT SPECIFICATION

(11) **EP 2 783 179 B1**
(45) Date of publication and mention of the grant of the patent: **12.06.2019**
(21) Application number: 12851960.0
(22) Date of filing: 22.11.2012
(51) Int. Cl.: F28D 19/04, F23L 15/02

(54) **REGENERATIVE HEAT EXCHANGER**
REGENERATIVER WÄRMETAUSCHER
ÉCHANGEUR DE CHALEUR RÉGÉNÉRATIF

(30) Priority: 25.11.2011 FI 20116183
(43) Date of publication of application: 01.10.2014
(73) Proprietor: RMV Tech Oy, 61300 Kurikka (FI)
(72) Inventor: VIITAMÄKI, Markus, FI-61300 Kurikka (FI)
(74) Representative: Kolster Oy Ab
(86) International application number: PCT/FI2012/051156
(87) International publication number: WO 2013/076370

(56) References cited:
- EP-A1- 1 775 440
- AU-A- 1 108 066
- US-A- 2 846 195
- US-A- 3 000 617
- US-A- 4 513 807
- US-A- 6 085 829

## Description

### Background of the invention

The invention relates to a regenerative heat exchanger comprising a frame, a rotor pivotally mounted to the frame, a heat transfer honeycomb system arranged in the rotor, means for conveying a warm gas flow through the heat transfer honeycomb system, and means for conveying a cold gas flow through the heat transfer honeycomb system, whereby heat brought by the warm gas flow to the heat transfer honeycomb system is transferred in the heat transfer honeycomb system to the cold gas flow, heating it, whereby the means for conveying both the warm and the cold gas flows are arranged to convey said flows radially through the heat transfer honeycomb system. US 2846195 A discloses a regenerative heat exchanger having the features in the preamble of claim 1.

In a typical rotating heat exchanger, the rotor is a honeycomb-like disc wherein through-flow channels of a heat transfer honeycomb system formed thereby are parallel with the rotation shaft of the rotor. Gas or air flows travel in a direction opposite to that of the honeycomb system, i.e. in an axial direction of the rotor. One of said flows may pass above the rotor while the other may pass below the rotor, in which case the flows are separated from one another e.g. by horizontal walls provided at the level of the shaft of the rotor.

The problem with the prior art heat exchanger is its operation under high temperatures and high operating pressures. In such a case, thermal expansion takes place mainly in the rotating rotor whose diameter increases as a consequence of the thermal expansion. This, in turn, makes the rotor challenging or even impossible to seal to the frame surrounding it.

### Summary of the invention

An object of the invention is thus to provide a novel rotating heat exchanger for enabling the above-mentioned problems to be solved. This object is achieved by the heat exchanger according to the invention, which is characterized in that the frame comprises a casing part defining an inner space and a rear plate and a front plate closing the casing part axially, a shaft of the rotor being pivotally mounted to the rear and the front plate, whereby the means for conveying a warm gas flow through the heat transfer honeycomb system comprise a warm gas flow inlet channel provided in the front plate and an outlet channel provided on one side of the casing part, and the means for conveying a cold gas flow through the heat transfer honeycomb system comprise a cold gas flow inlet channel provided in the front plate and an outlet channel provided on another side of the casing part, opposite the first side.

The heat transfer honeycomb system is formed by a plurality of heat transfer honeycombs arranged radially on an outer circumferential section of the rotor and inserted in pipes provided inside the rotor, whereby an inner circumferential section of the rotor is divided radially into flow division compartments which in number equal the number of heat transfer honeycombs and which lead to respective heat transfer honeycombs.

In the present invention, owing to the frame structure of the heat exchanger, possible radial thermal expansion of the rotor does not cause sealing problems. Further, the rotor and the end plates are easy to seal e.g. by means of labyrinth seals dimensioned according to the largest and smallest possible thermal expansion. In conventional rotating heat exchangers, no sealing is conventionally used at all but the rotor is only dimensioned to travel close enough to the frame structure surrounding its circumference.

### List of figures

The invention is now described in closer detail by means of one preferred embodiment and with reference to the accompanying drawings, in which
Figure 1 generally shows a gas turbine system;
Figure 2 is an explosive view of a heat exchanger according to the invention;
Figure 3 is a side view of the heat exchanger according to Figure 1, assembled;
Figure 4 is a sectional view taken from Figure 3 of the heat exchanger according to Figure 1, assembled;
Figure 5 is a front view of the heat exchanger according to Figure 1, assembled; and
Figure 6 is a rear view of the heat exchanger according to Figure 1, assembled.

### Detailed description of the invention

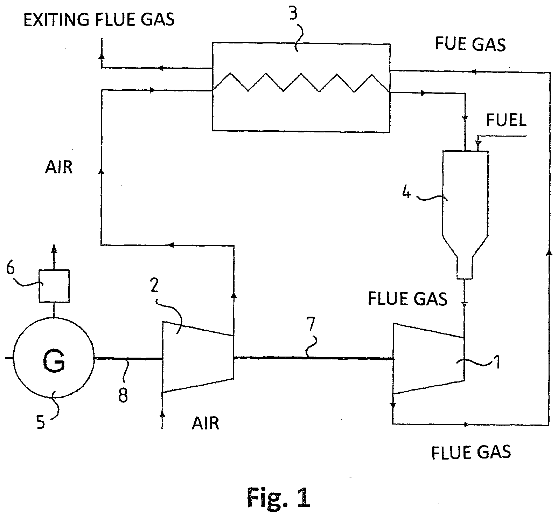

Figure 1 schematically shows a gas turbine system for producing electric energy, the regenerative heat exchanger according to the invention being particularly suitable for the system. As its main components, this system comprises a turbine 1, a compressor 2, a heat exchanger 3, a combustion chamber 4, a generator 5, and a frequency converter 6.

A runner wheel of the turbine 1 and the compressor 2 are connected to the same shaft 7, and the generator 5 is connected by an intermediate shaft 8 to an entity formed by the turbine 1 and the compressor 2. The compressor 2 compresses inlet air it has taken and blows the compressed air to the heat exchanger 3 to be pre-heated. The pre-heated air is conveyed to the combustion chamber 4, whereto fuel is also fed. A mixture of air and fuel burns in a flame tube located inside the combustion chamber 4 and advances therefrom as a flue gas flowing at a high speed, rotating the runner wheel of the turbine 1. The runner wheel of the turbine 1, in turn, rotates the compressor 2 and the generator 5. After the turbine 1, the pressure of the flue gas drops close to air pressure, but it still contains a lot of heat energy which is conveyed back to the heat exchanger 3 in order to carry out the aforementioned preheating.

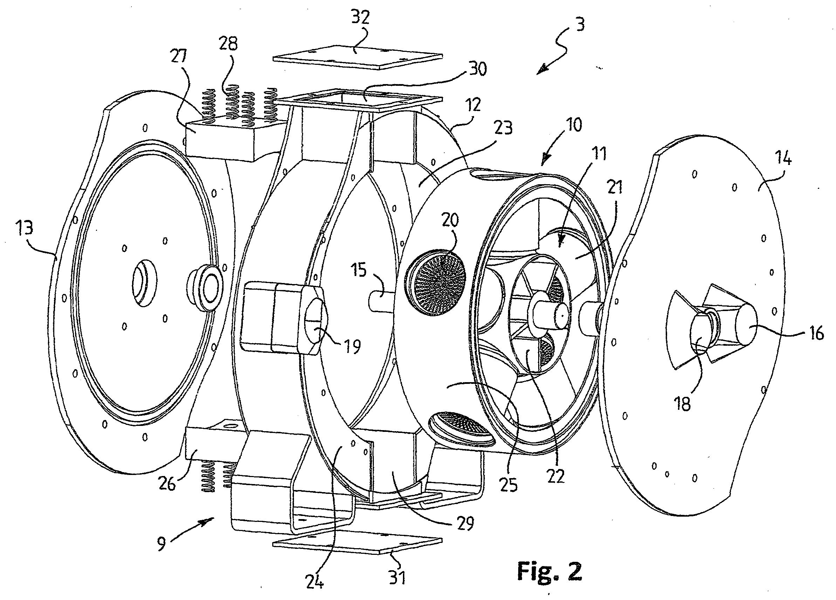

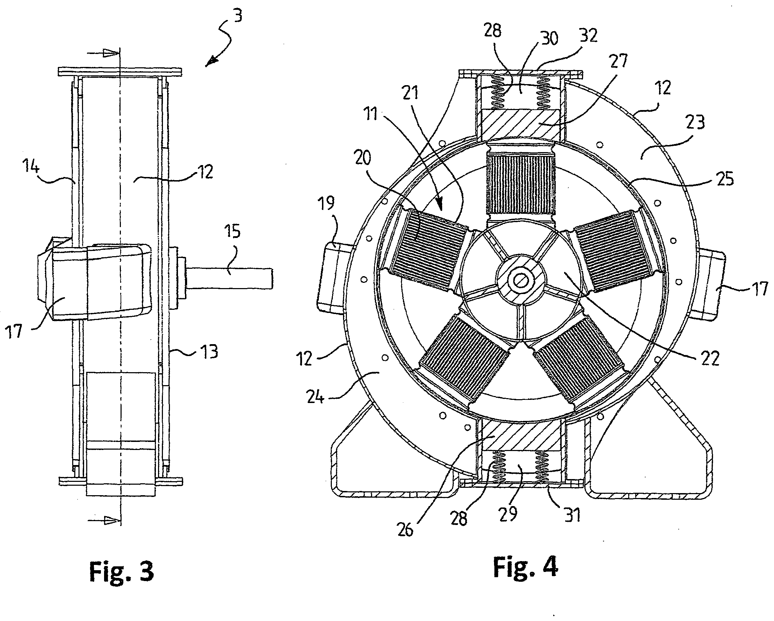

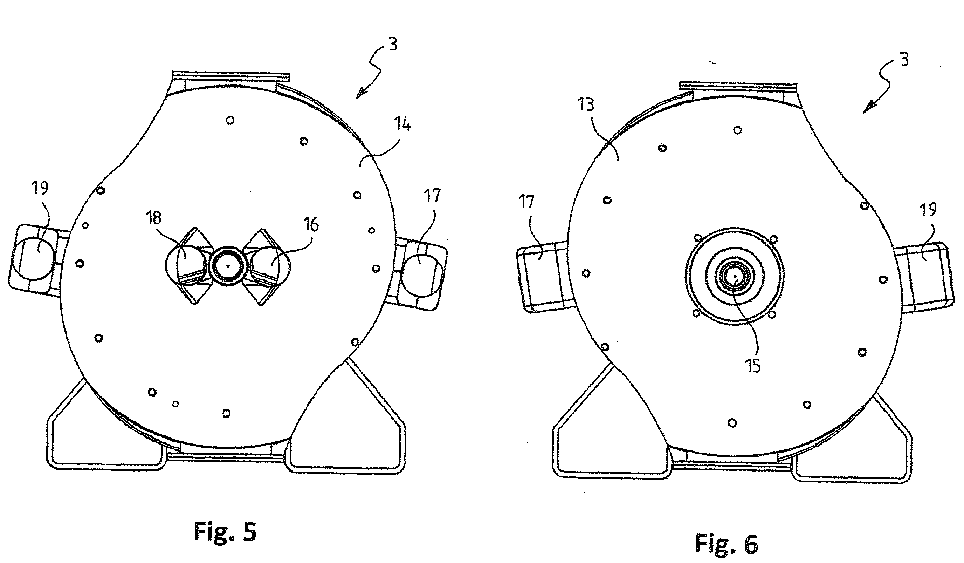

Referring next to Figures 2 to 6, as its basic elements the regenerative heat exchanger 3 according to the invention comprises a frame 9, a rotor 10 pivotally mounted to the frame 9, a heat transfer honeycomb system 11 arranged in the rotor 10, means 16, 17 for conveying a warm gas flow through the heat transfer honeycomb system 11, means 18, 19 for conveying a cold gas flow (air flow) through the heat transfer honeycomb system 11, whereby heat brought by the warm gas flow to the heat transfer honeycomb system 11 is transferred in the heat transfer honeycomb system 11 to the cold air flow, heating it, as shown in Figure 1.

The essential point in this novel heat exchanger 3 is that both the warm and the cold gas flows are conveyed radially through the heat transfer honeycomb system 11, and a structure for implementing this will be described next.

The concept gas or gas flow is to be understood to also contain air or air flow. In this example, the cold gas flow is an air flow while the hot gas flow is a gas flow containing flue gases.

In order to convey the gas flows, the frame 9 comprises a casing part 12 defining an inner space, and a rear plate 13 and a front plate 14 axially closing the casing part 12, a shaft 15 of the rotor 10 being pivotally mounted to the rear and the front plate 13, 14. In such a case, the means for conveying a warm gas flow through the heat transfer honeycomb system 11 comprise a warm gas flow inlet channel 16 provided in the front plate 14 and an outlet channel 17 provided on one side of the casing part 12, and the means for conveying a cold gas flow (air flow) through the heat transfer honeycomb system 11 comprise a cold gas flow inlet channel 18 provided in the front plate 14 and an outlet channel 19 provided on another side of the casing part 12, opposite the first side.

The heat transfer honeycomb system 11 is formed by a plurality of heat transfer honeycombs 20 arranged radially on an outer circumferential section of the rotor 10 and inserted in pipes 21 provided inside the rotor 10. Similarly, an inner circumferential section of the rotor 10 is divided radially into flow division compartments 22 which in number equal the number of heat transfer honeycombs 20 and which lead to respective heat transfer honeycombs 20 and which at the same time are in connection with the inlet channels 16 and 18 provided on opposite sides of the shaft of the rotor 10.

The heat transfer honeycombs 20 are metal honeycombs which may be coated with a catalytic material and which thus at the same time serve as flue gas purifiers. They are also highly resistant to high temperatures and provide a large heat transfer surface area.

The hot and cold gas flow outlet channels 17, 19 are connected to collection chambers 23, 24 defined from above by the casing part 12 of the frame 9, the rear and front plates 13, 14 and, on the other hand, by an outer circumference 25 of the rotor 10, whereto the heat transfer honeycombs 20 open up. The collection chambers 23, 24 extend on opposite sides of the casing part 12 to seals 26, 27 which separate them from one another and which divide the chambers 23, 24 to extend to circumferential areas of equal magnitude and which at the same time become sealed against the outer circumference 25 of the rotor 10. The cross section of the collection chambers 23, 24 changes in a direction of their circumference. The purpose of this structure is to even out changes in mass flow when the rotor 10 rotates and gas flows through the heat transfer honeycombs 20.

The seals 26, 27, which are preferably made of graphite, extend in a direction of the circumference of the rotor 10 substantially over a distance having the length of the diameter of one heat transfer honeycomb 20, and the seals 26, 27 are by means of springs 28 or pressure forced against the circumference 25 of the rotor 10. The springs 28 are supported against an inner surface of a cover 31, 32 closing a given seal space 29, 30.

An electric motor and a gear system (not shown) are mounted to the rear plate 13 in order to rotate the rotor 10.

The operation principle of the above-described heat exchanger is as follows:
Warm gas is conveyed to the inlet channel 16 which is provided in the surface of the front plate 14 and which at the same time serves as a channel for guiding and turning the flow, and from this channel the gas passes via the flow division compartments 22 through the heat transfer honeycombs 20, simultaneously heating them. From the heat transfer honeycombs 20, the cooled gas is conveyed to the collection chamber 23 and is discharged therefrom to the outlet channel 17. The rotor 10 constantly rotates at a low speed and, similarly, cold gas (air) is conveyed to the inlet channel 18 provided in the surface of the front plate 14 and therefrom via the flow division compartments 22 through the heated heat transfer honeycombs 20, whereby heat energy contained in the heat transfer honeycombs 20 is absorbed into the cold gas (air). From the heat transfer honeycombs 20, the heated gas (air) is conveyed to the collection chamber 24 and is discharged therefrom to the outlet channel 19. The gas (air) thus pre-heated may be led to the combustion chamber 4 described in the beginning, whereas the cooled gas (flue gas) is removed from the system.

The above description of the invention is only intended to illustrate the basic idea according to the invention. A person skilled in the art may thus vary its details within the scope of the accompanying claims.

## Claims

1. A regenerative heat exchanger, comprising
a frame (9),
a rotor (10) pivotally mounted to the frame (9),
a heat transfer honeycomb system (11) arranged in the rotor (10), means (16, 17) for conveying a warm gas flow through the heat transfer honeycomb system (11),
means (18, 19) for conveying a cold gas flow through the heat transfer honeycomb system (11), and
whereby heat brought by the warm gas flow to the heat transfer honeycomb system (11) is transferred in the heat transfer honeycomb system (11) to the cold gas flow, heating it,
whereby the means (16 to 19) for conveying both the warm and the cold gas flows are arranged to convey said flows radially through the heat transfer honeycomb system (11),
**characterized in that**
the frame (9) comprises a casing part (12) defining an inner space and a rear plate (13) and a front plate (14) closing the casing part (12) axially, a shaft (15) of the rotor (10) being pivotally mounted to the rear and the front plate (13, 14), whereby the means for conveying a warm gas flow through the heat transfer honeycomb system (11) comprise a warm gas flow inlet channel (16) provided in the front plate (14) and an outlet channel (17) provided on one side of the casing part (12), and the means for conveying a cold gas flow through the heat transfer honeycomb system (11) comprise a cold gas flow inlet channel (18) provided in the front plate (14) and an outlet channel (19) provided on another side of the casing part (12), opposite the first side; and
the heat transfer honeycomb system (11) is formed by a plurality of heat transfer honeycombs (20) arranged radially on an outer circumferential section of the rotor (10) and inserted in pipes (21) provided inside the rotor (10), whereby an inner circumferential section of the rotor (10) is divided radially into flow division compartments (22) which in number equal the number of heat transfer honeycombs (20) and which lead to respective heat transfer honeycombs (20).

2. A heat exchanger as claimed in claim 1, **characterized in that** the heat transfer honeycombs (20) are metal honeycombs of the type used in catalyzers.

3. A heat exchanger as claimed in claim 1 or 2, **characterized in that** the hot and cold gas flow outlet channels (17, 19) are connected to collection chambers (23, 24) defined from above by the casing part (12) of the frame (9), the rear and front plates (13, 14) and, on the other hand, by an outer circumference (25) of the rotor (10), whereto the heat transfer honeycombs (20) open up, whereby the collection chambers (23, 24) extend on opposite sides of the casing (12) to seals (26, 27) which separate them from one another and which divide the chambers (23, 24) to extend to circumferential areas of equal magnitude and which at the same time become sealed against the outer circumference (25) of the rotor (10).

4. A heat exchanger as claimed in claim 3, **characterized in that** the cross section of the collection chambers (23, 24) changes in a direction of their circumference.

5. A heat exchanger as claimed in claim 3 or 4, **characterized in that** the seals (26, 27) extend in a direction of the circumference of the rotor (10) substantially over a distance having the length of the diameter of one heat transfer honeycomb (20), and the seals (26, 27) are by means of springs (28) forced against the circumference (25) of the rotor (10).

6. A heat exchanger as claimed in any one of claims 3 to 5, **characterized in that** the seals (26, 27) are made of graphite.

## Patentansprüche

1. Regenerativer Wärmetauscher, der umfasst:
ein Gehäuse (9)
einen Rotor (10), der drehbar an dem Gehäuse (9) installiert ist,
ein Wärmeübertragungs-Wabensystem (10), das in dem Rotor (10) angeordnet ist,
Einrichtungen (16, 17), mit denen ein warmer Gasstrom durch das Wärmeübertragungs-Wabensystem (11) geleitet wird,
Einrichtungen (18, 19), mit denen ein kalter Gasstrom durch das Wärmeübertragungs-Wabensystem (11) geleitet wird,
wobei durch den warmen Gasstrom in das Wärmeübertragungs-Wabensystem (11) eingeleitete Wärme in dem Wärmeübertragungs-Wabensystem (11) auf den kalten Gasstrom übertragen wird und ihn erwärmt,
und die Einrichtungen (16 bis 19), mit denen sowohl der warme als auch der kalte Gasstrom geleitet werden, so eingerichtet sind, dass sie die Ströme radial durch das Wärmeübertragungs-Wabensystem (11) leiten,
**dadurch gekennzeichnet, dass**
das Gehäuse (9) einen Verkleidungsteil (12), der einen Innenraum bildet, sowie eine hintere Platte (13) und eine vordere Platte (14) umfasst, die den Verkleidungsteil (12) axial abschließen, eine Welle (15) des Rotors (10) drehbar an der hinteren und der vorderen Platte (13, 14) installiert ist, die Einrichtungen, mit denen ein warmer Gasstrom durch das Wärmeübertragungs-Wabensystem (11) geleitet wird, einen Einlasskanal (16) für einen warmen Gasstrom, der sich in der vorderen Platte (14) befindet, sowie einen Auslasskanal (17) umfassen, der sich an einer Seite des Verkleidungsteils (12) befindet, und die Einrichtungen, mit denen ein kalter Gasstrom durch das Wärmeübertragungs-Wabensystem (11) geleitet wird, einen Einlasskanal (18) für einen kalten Gasstrom, der sich in der vorderen Platte (14) befindet, sowie einen Auslasskanal (19) umfassen, der sich an einer anderen Seite des Verkleidungsteils (12) befindet, die der ersten Seite gegenüberliegt; und
das Wärmeübertragungs-Wabensystem (11) durch eine Vielzahl von Wärmeübertragungs-Waben (20) gebildet wird, die radial an einem Außenumfangsabschnitt des Rotors (10) angeordnet sind und in Röhren (21) eingeführt sind, die sich im Inneren des Rotors (10) befinden, wobei ein Innenumfangsabschnitt des Rotors (10) radial in Stromteilungs-Kammern (22) unterteilt ist, deren Anzahl der Anzahl von Wärmeübertragungs-Waben (20) gleich ist und die zu jeweiligen Wärmeübertragungs-Waben (20) führen.

2. Wärmetauscher nach Anspruch 1, **dadurch gekennzeichnet, dass** die Wärmeübertragungs-Waben (20) Waben aus Metall von dem Typ sind, der in Katalysatoren eingesetzt wird.

3. Wärmetauscher nach Anspruch 1 oder 2, **dadurch gekennzeichnet, dass** die Auslasskanäle (17, 19) für den warmen und den kalten Gasstrom mit Sammel-Kammern (23, 24) verbunden sind, die von oben durch den Verkleidungsteil (12) des Gehäuses (9), die hintere und die vordere Platte (13, 14) und andererseits durch einen Außenumfang (25) des Rotors (10) gebildet werden und zu denen sich die Wärmeübertragungs-Waben (20) öffnen, wobei sich die Sammel-Kammern (23, 24) an einander gegenüberliegenden Seiten der Verkleidung (12) zu Dichtungen (26, 27) erstrecken, die sie voneinander trennen und die die Kammern (23, 24) so teilen, dass sie sich zu Umfangsbereichen gleicher Größe erstrecken, und die gleichzeitig an dem Außenumfang (25) des Rotors (10) abgedichtet werden.

4. Wärmetauscher nach Anspruch 3, **dadurch gekennzeichnet, dass** sich der Querschnitt der Sammel-Kammern (23, 24) in einer Richtung ihres Umfangs ändert.

5. Wärmetauscher nach Anspruch 3 oder 4, **dadurch gekennzeichnet, dass** die Dichtungen (26, 27) in einer Richtung des Umfangs des Rotors (10) im Wesentlichen über eine Ausdehnung verlaufen, die die Länge des Durchmessers einer Wärmeübertragungs-Wabe (20) hat, und die Dichtungen (26, 27) mit Federn (28) an den Umfang (25) des Rotors (10) gedrückt werden.

6. Wärmetauscher nach einem der Ansprüche 3 bis 5, **dadurch gekennzeichnet, dass** die Dichtungen (26, 27) aus Graphit bestehen.

## Revendications

1. Échangeur de chaleur régénératif, comprenant
un cadre (9),
un rotor (10) monté de manière pivotante sur le cadre (9),
un système en nid d'abeille à transfert de chaleur (11) disposé dans le rotor (10), des moyens (16, 17) pour acheminer un flux de gaz chaud à travers le système en nid d'abeille de transfert de chaleur (11),
des moyens (18, 19) pour acheminer un flux de gaz froid à travers le système en nid d'abeilles à transfert de chaleur (11), et
de sorte que la chaleur apportée par le flux de gaz chaud au système en nid d'abeilles à transfert de chaleur (11) est transférée dans le système en nid d'abeille à transfert de chaleur (11) au flux de gaz froid, en le chauffant,
de sorte que les moyens (16 à 19) pour acheminer les deux flux de gaz chaud et froid sont agencés pour acheminer lesdits flux de manière radiale à travers le système en nid d'abeilles de transfert de chaleur (11),
**caractérisé en ce que**
le cadre (9) comprend une partie de carter (12) définissant un espace intérieur et une plaque arrière (13) et une plaque avant (14) fermant la partie de carter (12) axialement, un arbre (15) du rotor (10) étant monté de manière pivotante sur la plaque arrière et avant (13, 14), de sorte que les moyens pour acheminer un flux de gaz chaud à travers le système en nid d'abeille de transfert de chaleur (11) comprennent un canal d'entrée de flux de gaz chaud (16) agencé dans la plaque avant (14) et un canal de sortie (17) agencé sur un côté de la partie de carter (12), et les moyens pour acheminer un flux de gaz froid à travers le système en nid d'abeille à transfert de chaleur (11) comprennent un canal d'entrée de flux de gaz froid (18) agencé dans la plaque avant (14) et un canal de sortie (19) agencé sur un autre côté de la partie de carter (12), opposé au premier côté ; et
le système en nid d'abeilles à transfert de chaleur (11) est formé par une pluralité de nids d'abeilles à transfert de chaleur (20) disposés radialement sur une section circonférentielle extérieure du rotor (10) et insérés dans des tuyaux (21) agencés à l'intérieur du rotor (10), de sorte qu'une section circonférentielle intérieure du rotor (10) est divisée radialement en compartiments de division d'écoulement (22) qui sont en nombre égal au nombre de nids d'abeilles à transfert de chaleur (20) et qui conduisent à des nids d'abeilles à transfert de chaleur (20) respectifs.

2. Échangeur de chaleur selon la revendication 1, **caractérisé en ce que** les nids d'abeilles à transfert de chaleur (20) sont des nids d'abeilles en métal du type utilisé dans des catalyseurs.

3. Échangeur de chaleur selon la revendication 1 ou 2, **caractérisé en ce que** les canaux de sortie de flux de gaz chaud et froid (17, 19) sont reliés à des chambres de collecte (23, 24) définies depuis le dessus par la partie de carter (12) du cadre (9), les plaques arrière et avant (13, 14) et, d'autre part, par une circonférence extérieure (25) du rotor (10), où les nids d'abeilles à transfert de chaleur (20) s'ouvrent, de sorte que les chambres de collecte (23, 24) s'étendent sur des côtés opposés du carter (12) jusqu'à des joints d'étanchéité (26, 27) qui les séparent les unes des autres et qui divisent les chambres (23, 24) pour qu'elles s'étendent jusqu'à des zones circonférentielles d'égale grandeur et qui deviennent en même temps scellées contre la circonférence extérieure (25) du rotor (10).

4. Échangeur de chaleur selon la revendication 3, **caractérisé en ce que** la section transversale des chambres de collecte (23, 24) change dans une direction de leur circonférence.

5. Échangeur de chaleur selon la revendication 3 ou 4, **caractérisé en ce que** les joints d'étanchéité (26, 27) s'étendent dans une direction de la circonférence du rotor (10) sensiblement sur une distance ayant la longueur du diamètre d'un nid d'abeilles à transfert de chaleur (20), et les joints d'étanchéité (26, 27) sont, au moyen de ressorts (28), poussés contre la circonférence (25) du rotor (10).

6. Échangeur de chaleur selon l'une quelconque des revendications 3 à 5, **caractérisé en ce que** les joints d'étanchéité (26, 27) sont en graphite.
